Europäisches Patentamt

European Patent Office

Office européen des brevets

(11) Veröffentlichungsnummer: **0 415 002 A2**

# EUROPÄISCHE PATENTANMELDUNG

(21) Anmeldenummer: **90109103.3**

(22) Anmeldetag: **15.05.90**

(51) Int. Cl.⁵: **A47G 1/12, A47J 45/06, A47J 45/07**

(30) Priorität: **31.08.89 DE 3928866**

(43) Veröffentlichungstag der Anmeldung:
**06.03.91 Patentblatt 91/10**

(84) Benannte Vertragsstaaten:
**AT BE CH DE DK ES FR GB GR IT LI LU NL SE**

(71) Anmelder: **Melitta-Werke Bentz & Sohn**
**Ringstrasse 99**
**W-4950 Minden 1(DE)**

(72) Erfinder: **Creyaufmüller, Peter**
**Bliefterningweg 6a**
**W-4950 Minden(DE)**

(74) Vertreter: **Stracke, Alexander, Dipl.-Ing. et al**
**Jöllenbecker Strasse 164**
**W-4800 Bielefeld 1(DE)**

(54) **Kanne mit einem daran angeklebten Handgriff.**

(57) Die Erfindung beschreibt eine aus einem mikro-wellentauglichen Material, vorzugsweise aus Glas, hergestellte Kanne (10) mit einem daran angeklebten Handgriff (11).

Im Sinne der vorliegenden Erfindung ist der Handgriff (11) zusätzlich zur Verklebung durch eine formschlüssige Verbindung mit der Kanne (10) gesichert.

Dabei kann die formschlüssige Verbindung vor-teilhafterweise durch zwei oder mehrere, am Hand-griff (11) vorgesehene Rast- oder Klemmhaken (13,14) herbeigeführt werden, welche in entspre-chend gestalteten Arretierungsabschnitten der Kanne (10) formschlüssig festgelegt sind.

Selbst im Falle eines Verklebungsbruches wird durch diese formschlüssige Verbindung zwischen Handgriff (11) und Kanne (10) noch eine praxisge-rechte Sicherung der Verbindung zwischen Handgriff (11) und Kanne (10) gewährleistet.

Fig.1

## KANNE MIT EINEM DARAN ANGEKLEBTEN HANDGRIFF

Die vorliegende Erfindung betrifft eine aus einem mikrowellentauglichen Material, vorzugsweise aus Glas, hergestellte Kanne mit einem daran angeklebten Handgriff.

Aus einem mikrowellentauglichen Material, vorzugsweise aus Glas, hergestellte Kannen sind für die Benutzung in einem Mikrowellenherd vorgesehen und dürfen von diesem Verwendungszweck ausgehend keine aus Metall gefertigten Befestigungselemente für den Handgriff aufweisen.

Man hat deshalb neben solchen Konstruktionen, bei denen der Handgriff mittels eines aus Kunststoff gefertigten Spannbandes festgelegt ist, bereits Kannen der in Rede stehenden Art gefertigt, bei denen der Handgriff angeklebt ist.

Aufgrund der verschiedensten, bei der Benutzung derartiger Kannen gegebenen Einflußfaktoren kann es im Laufe der Zeit dazu kommen, daß sich die Verklebung löst.

Geschieht dies, während die mit heißem Füllgut gefüllte

Kanne gehandhabt wird, kann es zu gefährlichen Verletzungen durch Verbrühungen kommen.

Der vorliegenden Erfindung liegt die Aufgabe zugrunde, die Gebrauchssicherheit einer Kanne der vorausgesetzten Art zu erhöhen.

Diese Aufgabe wird erfindungsgemäß dadurch gelöst, daß der Handgriff zusätzlich zur Verklebung durch eine formschlüssige Verbindung mit der Kanne gesichert ist.

Durch diese Maßnahme wird erreicht, daß selbst im Falle eines Verklebungsbruches immer noch eine Fixierung zwischen Handgriff und Kanne gegeben ist und somit die Gefahr von Verletzungen und Verbrühungen durch auslaufendes, heißes Füllgut bei einer Trennung der Kanne vom Handgriff praktisch beseitigt ist.

Der Benutzer merkt gleichwohl, daß sich die Verklebung gelöst hat und kann somit für Ersatz oder für die notwendige Reparatur der Kanne sorgen.

Nach einem weiteren Gedanken der Erfindung ist vorgesehen, daß der Handgriff mit mindestens zwei Rast- oder Klemmhaken versehen ist, welche im Bereich von entsprechend gestalteten Arretierungsabschnitten der Kanne formschlüssig festgelegt sind.

Durch derartige Rast- oder Klemmhaken am Handgriff einerseits und durch entsprechend gestaltete Arretierungsab schnitte an der Kanne andererseits wird eine preiswerte und praxisgerechte Lösung der formschlüssigen Verbindung des Handgriffes mit der Kanne erreicht.

Besonders zweckmäßig ist es, wenn die Rast- oder Klemmhaken am oberen und unteren Ende des Handgriffes vorgesehen sind und entsprechend im oberen und unteren Randbereich der Kanne fixiert sind.

Hierdurch werden günstige Hebelverhältnisse und demzufolge geringe spezifische Belastungen der zusätzlichen Fixierungsbereiche zwischen Kanne und Handgriff gewährleistet, was insbesondere dann von Bedeutung ist, wenn sich ein unerwünschter Verklebungsbruch einstellt.

Dabei ist davon auszugehen, daß an sich die Verklebung für die sichere Verbindung zwischen Kanne und Handgriff und für die Aufnahme der bei der Handhabung der Kanne auftretenden Kräfte zuständig ist. Die mehrfach erwähnte, zusätzliche Sicherung des Handgriffes gegenüber der Kanne ist nicht vorrangig für die Aufnahme der Haltekräfte vorgesehen, sondern dient letztendlich der Erhöhung der Sicherheit ganz allgemein und im besonderen bei einem - unerwünschten - Verklebungsbruch.

Dabei ist insbesondere bei aus Glas hergestellten Kannen eine hohe spezifische Belastung im formschlüssigen Verbindungsbereich zu vermeiden, was eben dadurch vermieden wird, daß die Rast- oder Klemmhaken einerseits im oberen und andererseits im unteren Rand bereich der Kanne fixiert sind.

Weitere Merkmale der Erfindung sind Gegenstand weiterer Unteransprüche.

In der beigefügten Zeichnung sind Ausführungsbeispiele der Erfindung dargestellt, die im folgenden näher beschrieben werden. Es zeigen:

Fig. 1 einen Vertikalschnitt durch eine erfindungsgemäße Kanne

Fig. 2 einen Vertikalschnitt durch eine Kanne nach einem weiteren Ausführungsbeispiel der Erfindung

Fig. 3 einen Teilschnitt durch den Handgriff der Kanne gemäß Fig. 2 nach der Linie III-III in Fig. 2, wobei ein im Schnittbereich liegender Rastoder Klemmhaken im noch nicht montierten Zustand gezeigt ist.

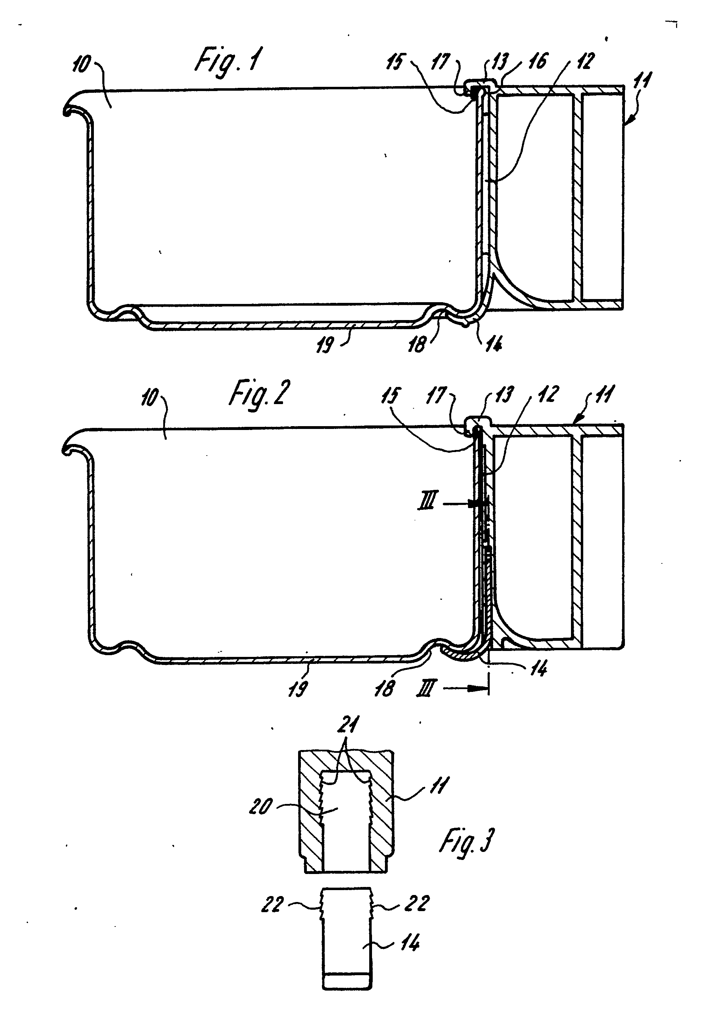

Sowohl in der Fig. 1 wie auch in der Fig. 2 ist mit dem Bezugszeichen 10 eine aus einem mikrowellentauglichen Material, vorzugsweise aus Glas, hergestellte Kanne und mit dem Bezugszeichen 11 ein daran angeklebter Handgriff bezeichnet.

Mit dem Bezugszeichen 12 ist jeweils der Klebebereich bezeichnet.

In der Praxis werden dabei Kleber verwendet, die für die jeweils verwendeten Materialpaarungen - Kanne 10 einerseits und Handgriff 11 andererseits - sowie für den vorgesehenen Verwendungszweck der Kanne 10, der die Verwendung in einem Mikrowellenherd vorsieht, besonders geeignet sind.

Im Sinne der vorliegenden Erfindung ist bei beiden, in den Fig. 1 uns 2 gezeigten Ausführungsbeispielen der Handgriff 11 zusätzlich zur Verklebung durch eine formschlüssige Verbindung mit der Kanne 10 gesichert.

Unter ausdrücklicher Bezugnahme auf Fig. 1 soll nun zunächst die dort gezeigte formschlüssige Verbindung zwischen Handgriff 11 und Kanne 10 beschrieben werden.

Fig. 1 zeigt, daß der Handgriff 11 mit zwei Rast- oder Klemmhaken 13, 14 versehen ist, wobei diese Rast- oder Klemmhaken 13 bzw. 14 im Bereich von entsprechend gestalteten Arretierungsabschnitten der Kanne 10 formschlüssige festgelegt sind.

Die Rast- oder Klemmhaken 13 und 14 sind vorteilhafterweise am oberen und am unteren Ende des Handgriffes 11 vorgesehen und entsprechend im oberen und unteren Randbereich der Kanne 10 fixiert.

Dabei übergreift der obere Klemmhaken 13 des Handgriffes den oberen, umlaufenden Rand 15 der Kanne 10. Dieser obere, umlaufende Rand ist zumindest im Arretierungsabschnitt mit einer Verdickung 16 ausgestattet. Der obere

Rast- oder Klemmhaken 13 ist im Querschnitt U-förmig gestaltet und hintergreift mit einem freien Randsteg 17 die erwähnte Randwulst 16.

Der untere Rast- oder Klemmhaken 14 ist vorteilhafterweise bogenförmig gestaltet und greift in eine entsprechend bogenförmig profilierte Ausbuchtung 18 im Bereich des Kannenbodens 19 ein.

Aus fertigungstechnischen Gründen ist die bogenförmige Ausbuchtung 18 im Bereich des Kannenbodens 19 umlaufend angebracht.

Der untere Rast- bzw. Klemmhaken 14 des insgesamt aus Kunststoff gefertigten Handgriffes 11 ist federelastisch, wodurch einerseits die leichte Montage des Handgriffes 11 an der Kanne 10 ermöglicht und erleichtert wird und andererseits sichergestellt ist, daß die formschlüssige Fixierung des Handgriffes 11 an der Kanne 10 durch Federkräfte unterstützt wird.

Das in Fig. 2 dargestellte Ausführungsbeispiel der Erfindung entspricht bezüglich der Gestaltung des oberen Rastoder Klemmhakens 13 des Handgriffes 11 und dessen Fixierung an der Kanne 10 dem Ausführungsbeispiel gemäß Fig. 1.

Die Kanne 10 ist im Bereich des Kannenbodens 19 wieder mit einer bogenförmig profilierten Ausbuchtung 18 versehen, die ebenso wie beim Ausführungsbeispiel nach Fig. 1 aus fertigungstechnischen Gründen umlaufend angebracht ist.

Der untere Rast- oder Klemmhaken 14 ist beim Ausführungsbeispiel nach Fig. 2 als separates Bauteil ausgebildet und in eine zur Unterseite des Handgriffes 11 hin offene Aussparung 20 mit seitlich angeordneten Rasten 21 eingeschoben. Der Rast- oder Klemmhaken 14 ist an seinem in die Aussparung 20 eingeschobenen, oberen Ende mit entsprechend geformten Rastzähnen 22 versehen und im eingeschobenen Zustand praktisch unlösbar mit dem Handgriff 11 im übrigen verbunden.

Durch die Rasten 21 im Bereich der Aussparung 20 und die Rastzähne 22 am Rast- oder Klemmhaken 14 kann eine Festlegung des unteren Rast- oder Klemmhakens 14 in unterschiedlichen Einschubstellungen relativ zum Handgriff 11 im übrigen erzielt werden, so daß ein einfacher Ausgleich evtl. gegebener Höhentoleranzen, wie sie bei der Herstellung insbesondere von aus Glas gefertigten Kannen auftauchen, möglich ist.

Auch der Rast- oder Klemmhaken 14 beim Ausführungsbeispiel nach Fig. 2 ist aus Kunststoff gefertigt und mit einer gewissen Federelastizität versehen, so daß zusätzlich zum Toleranzausgleich eine den Formschluß unterstützende Anpressung beider Rast- oder Klemmhaken 13 und 14 an der Kanne 10 erreicht wird.

Die beiden Ausführungsbeispiele nach den Fig. 1 und 2 stehen lediglich stellvertretend für die Verklebung unterstützende, formschlüssige Verbindungen zwischen Handgriff 11 und Kanne 10.

Beispielsweise kann über die dargestellten Ausführungsbeispiele hinausgehend zwischen den beiden Rast- oder Klemmhaken 14 im mittleren Bereich des Handgriffes 11 ein weiterer, derartiger Rast- oder Klemmhaken vorgesehen werden.

Ebenso ist es denkbar, beide Rast- oder Klemmhaken 13 und 14 als separate Bauteile auszubilden und rastend mit dem Handgriff 11 im übrigen zu verbinden im Sinne der in Fig. 2 gezeigten Ausführungsform bezüglich des Rast- oder Klemmhakens 14.

**Ansprüche**

1. Aus einem mikrowellentauglichen Material, vorzugsweise aus Glas, hergestellte Kanne mit einem daran angeklebten Handgriff, **dadurch gekennzeichnet**, daß der Handgriff (11) zusätzlich zur Verklebung durch eine formschlüssige Verbindung mit der Kanne (10) gesichert ist.

2. Kanne nach Anspruch 1, dadurch gekennzeichnet, daß der Handgriff (11) mit mindestens zwei Rast- oder Klemmhaken (13,14) versehen ist, welche im Bereich von entsprechend gestalteten Arretierungsabschnitten der Kanne (10) formschlüssig festgelegt sind.

3. Kanne nach Anspruch 1 oder 2, dadurch gekennzeichnet, daß die Rast- oder Klemmhaken (13,14) am oberen und unteren Ende des Handgriffes (11) vorgesehen sind und entsprechend im oberen und unteren Randbereich der Kanne (10) fixiert sind.

**4.** Kanne nach Anspruch 3, dadurch gekennzeichnet, daß der obere Rast- oder Klemmhaken (13) den oberen, umlaufenden Rand (15) der Kanne (10) übergreift.

**5.** Kanne nach Anspruch 3, dadurch gekennzeichnet, daß der unteren Rast- oder Klemmhaken (14) in einer Ausbuchtung (18) der Kanne (10) eingreift.

**6.** Kanne nach einem oder mehreren der Ansprüche 1 bis 5, dadurch gekennzeichnet, daß der untere Rast- oder Klemmhaken (14) bogenförmig gestaltet und die Ausbuchtung (18) der Kanne (10) entsprechend bogenförmig profiliert ist.

**7.** Kanne nach einem oder mehreren der Ansprüche 1 bis 6, dadurch gekennzeichnet, daß einer der Rast- oder Klemmhaken (13,14) als separates Bauteil ausgebildet ist und mit dem Handgriff (11) im übrigen durch eine Rastverbindung unlösbar verbunden ist.

**8.** Kanne nach Anspruch 7, dadurch gekennzeichnet, daß der als separates Bauteil gestaltete Rast- oder Klemmhaken (13,14) in eine einseitig offene, seitlich mit Rasten (21) versehene Aussparung (20) des Handgriffes eingeschoben und durch in die Rasten (21) eingreifende Rastzähne (22) fixiert ist.

**9.** Kanne nach Anspruch 7 oder 8, dadurch gekennzeichnet, daß der jeweils untere Rast- oder Klemmhaken (14) als separates Bauteil ausgebildet und Rasten mit dem Handgriff (11) im übrigen verbunden ist.

**10.** Kanne nach einem oder mehreren der vorhergehenden Ansprüche, dadurch gekennzeichnet, daß der obere Rastoder Klemmhaken (13) im Querschnitt U-förmig gestaltet ist und mit seinem freien, nach unten gerichteten Randsteg (17) den umlaufenden Rand (15) der Kanne (10) übergreift.

**11.** Kanne nach Anspruch 10, dadurch gekennzeichnet, daß der obere, umlaufende Rand (15) der Kanne (10) zumindest im Arretierungsbereich des oberen Rast- oder Klemmhakens (13) mit einer Wulst (16) ausgestattet ist.

**12.** Kanne nach einem oder mehreren der Ansürüche 1 bis 11, dadurch gekennzeichnet, daß mindestens einer der Rastoder Klemmhaken (13,14) federelastisch gestaltet ist.

**13.** Kanne nach einem oder mehreren der Ansürüche 1 bis 12, dadurch gekennzeichnet, daß der Handgriff (11) ebenso wie die Rast- oder Klemmhaken (13,14) aus Kunststoff gefertigt ist.

Fig. 1

Fig. 2

Fig. 3